# EUROPÄISCHE PATENTSCHRIFT

(11) **EP 2 935 517 B1**
(45) Veröffentlichungstag und Bekanntmachung des Hinweises auf die Patenterteilung: **21.03.2018**
(21) Anmeldenummer: 13805375.6
(22) Anmeldetag: 13.12.2013
(51) Int. Cl.: C10B 55/10, C01B 3/34

(54) **VERFAHREN ZUR VERWERTUNG VON KUPPELGASEN, BEGLEITGASEN UND/ODER BIOGASEN**
PROCESS FOR UTILIZING BLAST FURNACE GASES, ASSOCIATED GASES AND/OR BIOGASES
PROCÉDÉ DE VALORISATION DE GAZ SOUS-PRODUITS, DE GAZ ACCOMPAGNATOIRES ET/OU DE BIOGAZ

(30) Priorität: 18.12.2012 EP 12197657
(43) Veröffentlichungstag der Anmeldung: 28.10.2015
(73) Patentinhaber: BASF SE, 67056 Ludwigshafen am Rhein (DE); ThyssenKrupp Industrial Solutions AG, 45143 Essen (DE)
(72) Erfinder: SCHNEIDER, Christian, 97082 Würzburg (DE); BODE, Andreas, 68163 Mannheim (DE); KLINGLER, Dirk, 68199 Mannheim (DE); MACHHAMMER, Otto, 68163 Mannheim (DE); BRÜGGEMANN, Philipp, 68163 Mannheim (DE); KERN, Matthias, 67146 Deidersheim (DE); HORMUTH, Wolfgang Alois, 67487 St Martin (DE); GUZMANN, Marcus, 82541 Münsing (DE); KÖNIG, Rene, 67435 Neustadt (DE); BERNNAT, Jens, 67269 Grünstadt (DE); KOLIOS, Grigorios, 67435 Neustadt (DE); GOEKE, Volker, 82538 Geretsried (DE); MAASS, Hans-Juergen, 01328 Dresden (DE); BÜKER, Karsten, 44137 Dortmund (DE)
(74) Vertreter: BASF IP Association
(86) Internationale Anmeldenummer: PCT/EP2013/076598
(87) Internationale Veröffentlichungsnummer: WO 2014/095661

(56) Entgegenhaltungen:
- EP-A2- 0 191 522
- CH-A- 409 890
- GB-A- 877 359
- US-A1- 2003 182 861
- US-A1- 2009 314 993
- MURADOV N ET AL: "Fossil hydrogen with reduced CO2 emission: Modeling thermocatalytic decomposition of methane in a fluidized bed of carbon particles", INTERNATIONAL JOURNAL OF HYDROGEN ENERGY, ELSEVIER SCIENCE PUBLISHERS B.V., BARKING, GB, Bd. 30, Nr. 10, 1. August 2005 (2005-08-01), Seiten 1149-1158, XP027750548, ISSN: 0360-3199 [gefunden am 2005-08-01]

## Beschreibung

Die Erfindung betrifft ein Verfahren zur stofflichen Verwertung von Kuppelgasen, Begleitgasen und/oder Biogasen, deren Hauptbestandteile variierende Anteile von C1- bis C4-Alkanen, vornehmlich Methan, ferner Wasserstoff, Wasserdampf, Kohlenstoffmonoxid und Kohlenstoffdioxid bilden.

Unter einem Kuppelgas ist hierbei ein brennbares Restgas oder Rauchgas zu verstehen, das bei der Erzeugung von industriellen Grundstoffen anfällt. Als Beispiele für Kuppelgase sind Konverter- und Gichtgas, die zu großen Teilen aus Kohlenstoffmonoxid, Stickstoff und Kohlenstoffdioxid, sowie methanhaltiges Kokereigas (Koksofengas) in dem neben Methan, Kohlenstoffmonoxid und Stickstoff auch über 50% Wasserstoff sein können, zu nennen.

Da die Trennung der in den Kuppelgasen enthaltenen Substanzen verfahrenstechnisch komplex, energieintensiv und in den seltensten Fällen wirtschaftlich ist, werden diese bis heute vorwiegend in speziellen Kraftwerken als Brennstoff verwendet oder in der Fackel verbrannt, beziehungsweise nachverbrannt. Dabei wird klimaschädliches Kohlenstoffdioxid erzeugt und in die Atmosphäre freigesetzt. Eine stoffliche Verwertung von Kuppelgasen wird ferner durch den hohen Feststoffanteil und den hohen Schwefelanteil, die bei katalytischen Verfahren den Katalysator vergiften oder verkoken würden, erschwert.

Bereits in den Achtziger Jahren gab es einige Überlegungen zur Verwendung von Kuppelgasen, insbesondere zur Methanisierung der Kohlenstoff-Bestandteile und anschließenden Einsatz in der Methanolsynthese:
JP-56-8408 offenbart Koksofengas und Konvertergas im Volumenverhältnis H2 und CO von 3 zu mischen und dann zu methanisieren. Das methanreiche Gas wird nach weiterer Aufbereitung durch Sauerstoffzugabe an einem CrO-Katalysator partiell zu Methanol oxidiert.

EP 200880 beschreibt basierend auf der JP-56-8408 Koksofengas bzw. aufbereitetes Koksofengas mit Konvertergas im Volumenverhältnis H2 und CO von ca. 2 zu mischen und dann direkt in einer Methanolsynthese einzusetzen.

In DE 3805397 wird ein katalytisches Verfahren zur Herstellung von Methanol aus Koksofengas und Hüttengas offenbart.

Der TREMP-Prozess von Haldor-Topsoe (veröffentlich in CN 101649233 B) beschreibt ein Verfahren zur stofflichen Nutzung der flüchtigen Produkte der Kohlevergasung. Um eine definierte, reproduzierbare Zusammensetzung zu erhalten, wird das CO- und H2-reiche Gas in einer Methanisierungsstufe in synthetisches Erdgas umgewandelt. Es wird beschrieben, dass eine Serie von Katalysatoren und Ab-/Adsorbentien verwendet werden, um Chlor, Sauerstoff, Teer und andere Katalysatorgifte, sowie ungesättigte Kohlenwasserstoffen zu entfernen.

Nachteilig an den beschriebenen Verfahren ist, dass (i) die Methanisierung einen niedrigen Wirkungsgrad aufweist, da sie ein exothermer Prozess auf niedrigem Temperaturniveau ist, so dass die Prozessabwärme schlecht nutzbar ist; (ii) die Methanisierung eine volumenvermindernde Gleichgewichtsreaktion ist und somit hoher Druck, typischerweise von größer 50 bar, erforderlich ist, um wirtschaftlich sinnvolle Umsätze zu erreichen; (iii) ein Katalysator notwendig ist, der aufgrund der Verkokung und Vergiftung regelmäßig, in Extremfällen alle 5 bis 300 Sekunden, gewechselt werden muss, und (iv) die Methanisierung in der Wertschöpfungskette einen Schritt zurück bedeutet, da nach der Methanisierung das synthetische Erdgas wieder in Synthesegas konvertiert werden muss.

Ferner wird über den Einsatz der Kuppelgase als Koksersatz im Hochofenprozess nachgedacht.

Unter dem Begriff Begleitgas wird ein fossiles Brenngas verstanden, das bei der Erdölgewinnung aus den Erdölbohrungen und dem Schicht-Erdöl bei der Entgasung entweicht. Je nach Förderungsgebiet erhält man von einer Tonne Erdöl 25 bis 800 m³ Gas.

Da ein Begleitgas nur mit Schwierigkeiten verarbeitet oder transportiert werden kann, wird es oft abgefackelt oder zur Druckerhaltung wieder in die Lagerstätte eingepresst.

Unter dem Begriff Biogas ist ein brennbares Gas, das durch Vergärung von Biomasse jeder Art entsteht, zu verstehen. Biogas wird in Biogasanlagen hergestellt, wozu sowohl Abfälle als auch nachwachsende Rohstoffe vergoren werden.

Das Biogas wird derzeit zur Erzeugung von elektrischer Energie, zum Betrieb von Fahrzeugen oder zur Einspeisung in ein Gasversorgungsnetz eingesetzt werden.

Die CO2-Emissionen in Deutschland betrugen im Jahre 2010 rd. 960 Mio. t CO2-Äquivalent, wobei die Chemieindustrie mit ca. 5 % beiträgt. Unter ökologischen und ökonomischen Gesichtspunkten bestehen in der Chemie-Branche hohe Anreize, die CO2-Emissionen durch Veränderung der Rohstoffbasis, CO2-arme Erzeugungstechnologien, Optimierung des Energiebedarfs und insbesondere die Verwertung von prozessbedingtem CO2 zu großvolumigen Basischemikalien zu senken. Geeignete Basischemikalien sind beispielsweise Wasserstoff und Synthesegas, ein aus Wasserstoff und Kohlenstoffmonoxid bestehendes Stoffgemisch. Letzteres bildet eine ideale Schnittstelle zu vorhandenen petrochemischen Verfahren für die Produktion von z.B. Methanol, Dimethylether oder Fischer-Tropsch Produkten. Die weltweiten Bedarfe für Wasserstoff und Synthesegas liegen derzeit bei 50 Mio t/a, bzw. 220 Mio t/a.

Großtechnisch wird Synthesegas heutzutage nach dem Dampfreforming-Verfahren hergestellt. Beim Dampfreforming-Verfahren wird heißer Wasserdampf mit dem zu reformierenden Gas (zum Beispiel Erdgas) oder mit verdampfter Flüssigkeit (zum Beispiel Leichtbenzin) vermischt und unter ständiger Energiezufuhr an einem heterogenen Katalysator in der Gasphase umgesetzt.

Problematisch ist die Herstellung von Synthesegas mit einem Wasserstoff zu Kohlenstoffmonoxid-Verhältnis von 1,0 bis 2,0 durch Dampfreformierung. Dieses Verhältnis an H₂/CO ist von besonderer Bedeutung für Downstream-Nutzung im Bereich Treibstoffe und Chemikalien und stellt für die Dampfreformierung eine besondere Herausforderung dar, da hier Katalysatoren benötigt werden, die eine besondere Stabilität gegen Verkokung aufweisen. Alternative Verfahren zur Herstellung von Synthesegas mit einem H₂/CO Verhältnis von 1,0 bis 2,0 sind die autotherme Reformierung von Erdgas und die Partialoxidation. Beide Verfahren werden technisch angewendet, erfordern aber den Einsatz von Reinsauerstoff, der durch Luftzerlegung gewonnen wird. Beispielsweise benötigt die Partialoxidation von Erdgas im Zulauf ein theoretisches molares Verhältnis O₂:CH4=1:2. Die energetisch sehr anspruchsvolle kryogene Luftzerlegung ist daher für die beiden letzteren Verfahren ein maßgeblicher Kostentreiber.

Eine Möglichkeit der stofflichen Verwertung von Kohlenstoffdioxid ist die Reformierung von Methan und Kohlenstoffdioxid, da mittels dieses Verfahrens zum einen die Basischemikalie Synthesegas hergestellt werden kann und zum anderen Kohlenstoffdioxid auf chemischem Weg gebunden wird und dadurch eine Emission in die Atmosphäre vermieden wird.

Zahlreiche wissenschaftliche Veröffentlichung und Patente beziehen sich auf die Herstellung von Synthesegas mittels Kohlenstoffdioxid-Reformierung von Methan. Es ist bekannt, dass Nickel- oder edelmetallhaltige Katalysatoren für diese Kohlenstoffdioxid-Reformierung von Methan (auch als Trockenreformierung bekannt) eingesetzt werden können.

Aufgrund des Boudouard-Gleichgewichts sowie der thermischen Zersetzung von Methan entsteht Kohlenstoff, der sich unter anderem auf dem Katalysator absetzt und diesen vergiftet. Um dieser Problematik zu begegnen, schlägt US 2009/203519 den Einsatz eines eisenhaltigen Abscheide-Katalysators vor, auf dem sich gebildeter Kohlenstoff ablagert. Die Aufnahmefähigkeit des Abscheide-Katalysators ist allerdings begrenzt, so dass in periodischen Abständen eine Katalysatorregeneration, beispielsweise mit Hilfe eines Fluids, durchgeführt werden muss. Ferner offenbart US 2009/203519 keine technische Lösung bezüglich der Wärmezufuhr für die stark endotherme Reformierungsreaktion.

US 2011/0089378 beschreibt die Präparation von Katalysatoren wie beispielsweise BaCO₃-Ba₂TiO₄ (1:1)/NiO (catalyst A), Sr₂TiO₄/NiO (catalyst B), BaCO₃-BaAl₂O₄ (2:1)/NiO sowie deren Anwendung bei der Trockenreformierung von Methan. Der über mindestens 8 Stunden verkokungsresistente Katalysator ist prinzipiell für die Realisierung einer kontinuierlichen Fahrweise geeignet. Diese Lösung ist allerdings mit dem Nachteil hoher Katalysatorkosten verbunden.

In WO 2013/4391 wird ein Verfahren zur Herstellung von Synthesegas offenbart, in dem Methan und Kohlenstoffdioxid in einem kohlenstoffhaltigen Feststoffbett umgesetzt werden. Es wird erwähnt, dass ebenso die Umsetzung von Kuppelgasen wie Koksofengas und/oder Konvertergas und/oder Gasen aus Kupolöfen möglich ist, da diese sowohl Methan als auch Kohlenstoffdioxid enthalten. Es wird zwar in WO 2013/004391 beschrieben, dass ein Synthesegas ohne nennenswerter Feststoffbelastung erhalten wird, die hierfür einzuhaltenden Verfahrensparameter werden jedoch nicht im Einzelnen beschrieben.

In EP 191 522 wird ein Verfahren zur Kohlenwasserstoffreformierung mit Kohlendioxid in einem Wirbelbettreaktor beschrieben. Die Reaktion wird bei einer Temperatur im Bereich von 700 bis 1500°C und einer Strömungsgeschwindigkeit von 2 bis 40 m/s durchgeführt. Der kohlenstoffhaltige Feststoff wird auf dem Trägermaterial abgeschieden. Es wird in EP 191 522 keine Gegenstrom-Fahrweise von Trägermaterial und Gasstrom beschrieben, die ein Abkühlen des entstehenden Synthesegases im Reaktor und somit eine Wärmeintegration ermöglichen würde.

Aufgabe der vorliegenden Erfindung ist es, ein Verfahren aufzuzeigen, das kohlenwasserstoffhaltige, insbesondere methanhaltige, und/oder kohlenstoffdioxid-haltige Kuppelgase, Begleitgase und/oder Biogase als Edukt einsetzt und somit stofflich verwertet. Eine weitere Aufgabe der vorliegenden Erfindung ist es, das Viel-Komponentengemisch Kuppelgas von längerkettigen Kohlenwasserstoffen, insbesondere Aromaten und/oder unerwünschten Feststoffen und/oder schwefelhaltigen Verbindungen, in eine definierte Gasmischung weniger konkreter Gase, die sich vorteilhaft nach dem Fachmann bekannten Methoden voneinander abtrennen lassen, zu überführen und somit in die stoffliche Wertschöpfungskette einführen zu können. Eine weitere Aufgabe der vorliegenden Erfindung ist es, ein Verfahren aufzuzeigen, das resistent/robust ist gegen Staubbelastung und typische Katalysatorgifte. Eine weitere Aufgabe ist ferner, ein stoffliches Verwertungsverfahren der kohlenwasserstoffhaltige, insbesondere methanhaltige, und/oder kohlenstoffdioxidhaltige Kuppelgase, Begleitgase und/oder Biogase aufzuzeigen, das ohne aktiv-metallhaltige Katalysatoren auskommt. Eine weitere Aufgabe war es, ein Verfahren zur Synthesegas-Herstellung aufzuzeigen, das nicht nur ein fixes Wasserstoff zu Kohlenstoffmonoxid-Verhältnis produzieren kann, sondern bei dem sich das Wasserstoff zu Kohlenstoffmonoxid-Verhältnis bedarfsgesteuert einstellen lässt. Ferner ist die Aufgabe der vorliegenden Erfindung Synthesegas und Wasserstoff mit geringem CO2-Fußabdruck für die chemische Industrie bereitzustellen.

Als längerkettige Kohlenwasserstoffe werden solche verstanden, die aus einem Kohlenstoff-Grundgerüst von mehr als zwei Kohlenstoffatomen bestehen.

Diese Aufgabe wird erfindungsgemäß durch ein Verfahren gelöst, in dem das kohlenwasserstoffhaltige und kohlenstoffdioxidhaltige Kuppelgas, Begleitgas und/oder Biogas in einen Reaktionsraum eingeleitet wird und das im Kuppelgas, Begleitgas und/oder Biogas enthaltenen Vielkomponentengemisch in einer Hochtemperaturzone bei Temperaturen zwischen 1100 und 1400°C und in Gegenwart eines Trägers in ein Produkt-Gasgemisch, das zu mehr als 95 Vol.-% aus CO, CO2, H2, H2O, CH4 und N2 besteht, umgewandelt wird, wobei der Träger als Wanderbett durch den Reaktionsraum geführt wird und die Gasmischung Kuppelgas, Begleitgas und/oder Biogas im Gegenstrom zum Träger geleitet wird und das in der Hochtemperaturzone, gebildete heiße Synthesegas weiter im Gegenstrom durch das Wanderbett geführt und in direktem Wärmetausch mit diesem abgekühlt wird, wobei die Strömungsgeschwindigkeit der Gasmischung Kuppelgas, Begleitgas und/oder Biogas in der Reaktionszone weniger als 20 m/s beträgt und das in der Hochtemperaturzone gebildete Synthesegas mit > 200 K/s abgekühlt wird.

Unter einem kohlenstoffhaltigen Feststoff ist in der vorliegenden Erfindung ein Produkt zu verstehen, dass vorteilhaft zu mindestens 90 Gew.-%, bevorzugt zu mindestens 95 Gew.-%, besonders bevorzugt zu mindestens 98 Gew.-%, insbesondere zu mindestens 99 Gew.-%, aus Kohlenstoff besteht.

Vorteilhaft beträgt die Strömungsgeschwindigkeit der Gasmischung Kuppelgas, Begleitgas und/oder Biogas in der Reaktionszone weniger als 10 m/s, bevorzugt weniger als 5 m/s, insbesondere weniger als 1 m/s.

Der Oberbegriff Kuppelgas umfasst insbesondere kohlenstoffdioxidhaltiges Gichtgas (Blast furnace gas) und Konvertergas (converter gas) sowie methanhaltiges Koksofengas (coke oven gas) mit folgender Zusammensetzung:
Typischerweise bestehen Gichtgase aus 40 bis 70 Vol.-% Stickstoff, bevorzugt 45-60 Vol.-% Stickstoff, 20-30 Vol.-% Kohlenstoffmonoxid, 20-25 Vol.-% Kohlenstoffdioxid und 2-4 Vol.-% Wasserstoff.

Die Konvertergase bestehen typischerweise aus 10-20 Vol.-% Kohlenstoffdioxid, 60-70 Vol.-% Kohlenstoffmonoxid, 15-25 Vol.-% Stickstoff, bevorzugt 15-20 Vol.-% Stickstoff, und 1-5 Vol.-% Wasserstoff.

Die Kokerei-Gase bestehen typischerweise aus 50-65 Vol.-% Wasserstoff, bevorzugt 50-60 Vol.-% Wasserstoff, 15 bis 50 Vol.-% Methan, bevorzugt 20-30 Vol.-% Methan, 5-15 Vol.-% Stickstoff und 1-10 Vol.-% Kohlenstoffmonoxid und 0-5 Vol.-% Kohlenstoffdioxid.

Das Kuppelgas eines Hochofenbetreibers setzt sich vorteilhaft aus 80 bis 90 % Vol.-% Gichtgas, aus 1 bis 10 Vol.-% Konvertergas und aus 1 bis 10 Vol.-% Koksofengas zusammen, beispielsweise aus 85 Vol.-% Gichtgas, aus 5 Vol.-% Konvertergas und aus 5 Vol.-% Koksofengas zusammen.

Das Begleitgas beinhaltet vorteilhaft Methan, Ethan, Ethylen, Propan, Propylen und Butan und hat vorteilhaft folgende Zusammensetzung: 75 bis 85 Vol.-% Methan, 1 bis 10 Vol.-% Ethan, 1 bis 10 Vol.-% Propan, 1 bis 10 Vol.-% Butan, 0,1 bis 5 Vol.-% Stickstoff und 0 bis 1 Vol.-% Kohlenstoffdioxid, beispielsweise 81 Vol.-% Methan, 5 Vol.-% Ethan, 6 Vol.-% Propan, 4 Vol.-% Butan, 1 Vol.-% Stickstoff und < 0,15 Vol.-% Kohlenstoffdioxid.

Das Biogas hat vorteilhaft folgende Zusammensetzung: 50 - 70 Vol.-% Methan, 30 - 40 Vol.-% CO2 und 1-15 Vol.-% N2.

Je nach Verwertungsmöglichkeit können auch Mischungen aus unterschiedlichen Anteilen Koksofengas, Gichtgas, Konvertergas und/oder Rauchgas zum Einsatz kommen, bevorzugt sind Mischungen aus Koksofengas und Konvertergas.

Zur effizienten stofflichen Nutzung von Kuppelgasen, insbesondere Gicht- und Konvertergasen, kann der Zusatz von Methan bzw. C2 bis C4-Kohlenwasserstoffen in Form von Erdgas erforderlich sein.

Vorteilhaft wird durch das erfindungsgemäße Verfahren das Vielstoffgemisch Kuppelgas, Begleitgas und/oder Biogas, bevorzugt Kuppelgas, enthaltend Alkane, insbesondere Methan, ferner Wasserstoff, Wasserdampf, Kohlenstoffmonoxid, Kohlenstoffdioxid und Stickstoff, in ein definiertes Produkt-Gasgemisch enthaltend hauptsächlich Wasserstoff, Wasserdampf, Kohlenstoffmonoxid, Kohlenstoffdioxid, Stickstoff und Rest-Methan umgesetzt. Das Produkt-Gasgemisch enthält vorteilhaft mehr als 98 Vol.-%, bevorzugt mehr als 99 Vol.-%, insbesondere mehr als 99,5 Vol.-% der Substanzen Wasserstoff, Wasserdampf, Kohlenstoffmonoxid, Kohlenstoffdioxid, Stickstoff und (Rest)Methan.

Vorteilhaft werden die Komponenten Wasserstoff und Kohlenstoffmonoxid im Produkt-Gasgemisch angereichert. Vorteilhaft wird Wasserstoff unter Verwendung von Koksofengas um 30% bis 300% der (ursprünglichen) Menge im Koksofengas, bevorzugt um 50% bis 200%, durch das erfindungsgemäße Verfahren angereichert. Vorteilhaft wird Kohlenstoffmonoxid unter Verwendung von Gichtgas um 5% bis 30% der (ursprünglichen) Menge im Gichtgas, bevorzugt um 10% bis 25%, durch das erfindungsgemäße Verfahren angereichert. Vorteilhaft wird Kohlenstoffmonoxid unter Verwendung von Konvertergas um 1% bis 10% der (ursprünglichen) Menge im Konvertergas, bevorzugt um 2% bis 6%, durch das erfindungsgemäße Verfahren angereichert. Vorteilhaft wird Kohlenstoffmonoxid unter Verwendung von Koksofengas um 0 bis 1500% der (ursprünglichen) Menge im Koksofengas, bevorzugt um 10% bis zur 1000%, durch das erfindungsgemäße Verfahren angereichert.

Die nachfolgende Tabelle gibt das Verhältnis von H2 zu CO in der Produkt-Gasmischung an in Abhängigkeit von dem atomaren C:H:O-Verhältnis in den Kuppelgasen, Begleitgasen und/oder Biogasen an, unabhängig davon, ob die Elemente ursprünglich gebunden waren:

| C | H | O | H2:CO |
|---|---|---|---|
| 1 | 4 | 0 | |
| 1 | 4 | 0,5 | 3,8 |
| 1 | 4 | 1 | 2,1 |
| 1 | 4 | 2 | 1,5 |
| 1 | 4 | 3 | 1,1 |
| 1 | 4 | 4 | 0,8 |

Um die Produktzusammensetzung zu steuern, kann alternativ oder zusätzlich zu Kohlenstoffdioxid und/oder Wasser vorteilhaft ein sauerstoffhaltiges Gas, vorteilhaft in einem molaren Verhältnis von Sauerstoff zu Kohlenstoff von 0 bis 4:1, in den Reaktionsraum eingeleitet werden.

Typische Zusammensetzungen von Kuppelgasen (Zulauf) und ihrer gasförmigen Produkte (Produkt-Gasmischung) im Gleichgewicht nach der Pyrolyse bei 1200°C und 1 bar (Ablauf) finden sich in der nachfolgenden Tabelle (Angaben in Vol.-%).

| Rohgas | | CH4 | CO2 | N2 | CO | H2 | H2O |
|---|---|---|---|---|---|---|---|
| Gichtgas | Zulauf | 0 | 20% | 45% | 30% | 5% | 0 |
| | Ablauf | 0 | 17,2% | 45% | 32,7% | 2,2% | 2,8% |
| Konvertergas | Zulauf | 2,5% | 15% | 15% | 65% | 2,5% | 0 |
| | Ablauf | 0 | 10,3% | 14,3% | 67,8% | 5,2% | 1,9% |
| Koksofengas | Zulauf | 45% | 1% | 1% | 2% | 50% | 0 |
| | Ablauf | 0 | 0 | 0,6% | 2,8% | 96,6% | 0 |
| Biogas | Zulauf | 60% | 35% | 5% | 0 | 0 | 0 |
| | Ablauf | 0 | 0 | 2,6% | 35,5% | 61,5% | 0,4% |

Der Gehalt an schwefelhaltigen Verbindungen, z.B. H2S und/oder COS, im Produkt-Gasgemisch ist vorteilhaft kleiner als 0,1 Vol.-% (1000 Vol. ppm), bevorzugt kleiner als 0,01 Vol.-% (100 Vol. ppm), insbesondere kleiner als 0,001 Vol.-% (10 Vol. ppm). Der Gehalt an schwefelhaltigen Verbindung kann vorteilhaft mit Hilfe des erfindungsgemäßen Verfahrens um 85% bis 100% im Vergleich zum eingesetzten Kuppelgas reduziert werden, bevorzugt um 95% bis 100%, insbesondere um 99% bis 100%.

Von dem durch das Kuppelgas in den Prozess eingebrachten Feststoffgehalt verbleibt ein Feststoffanteil im Produkt-Gasgemisch von vorteilhaft kleiner als 2 mg/Nm³, bevorzugt kleiner als 0,5 mg/Nm³, insbesondere kleiner als 0,1 mg/Nm³. Der Feststoffanteil kann vorteilhaft mit Hilfe des erfindungsgemäßen Verfahrens um 50 bis 100% im Vergleich zum eingesetzten Kuppelgas reduziert werden, bevorzugt um 80 bis 100%, insbesondere um 95 bis 100%.

Prozesstechnisch unerwünschte Kohlenstoffablagerungen innerhalb des Reaktorraumes können reduziert werden um vorteilhaft 90 bis 100%, bevorzugt um 95 bis 100% und insbesondere um 99 bis 100%.

Vorteilhaft wird das erfindungsgemäße Verfahren kontinuierlich oder quasi-kontinuierlich gefahren. Vorteilhaft wird das erfindungsgemäße Verfahren ohne Einsatz eines aktivmetallhaltigen Katalysator durchgeführt.

Bei der Verwendung von kohlenwasserstoffhaltigen, insbesondere methanhaltigem Kuppelgas kann das für die Methanumsetzung benötigtes Kohlenstoffdioxid bereits im methanhaltigen Kuppelgas enthalten sein und mit diesem in den Reaktionsraum eingeleitet werden. Falls der Kohlenstoffdioxidgehalt des methanhaltigen Kuppelgases jedoch nicht ausreicht, um das gesamte Methan umzusetzen, wird zweckmäßigerweise Kohlenstoffdioxid aus einer Kohlenstoffdioxidquelle bezogen und in den Reaktionsraum eingebracht, so dass die Kohlenstoffdioxidkonzentration in der Hochtemperaturzone ausreichend hoch für eine vollständige Methanumsetzung ist.

Alternativ oder zusätzlich zu Kohlenstoffdioxid kann Wasser, vorteilhaft in einem molaren Verhältnis von Wasser zu Methan von 0,1 bis 2, bevorzugt 0,1 bis 1, in den Reaktionsraum eingeleitet werden, so dass wenigstens ein Teil des Methans mit Wasser und der verbleibende Rest mit Kohlenstoffdioxid zu Wasserstoff und Kohlenstoffmonoxid umgesetzt wird.

Eine bevorzugte Ausgestaltung des erfindungsgemäßen Verfahrens sieht vor, dass als Kohlenstoffdioxidquelle ein kohlenstoffdioxidhaltiges Kuppelgas verwendet wird.

Kohlenstoffdioxidhaltiges und methanhaltiges Kuppelgas können gemeinsam oder getrennt in den Reaktionsraum eingeleitet werden. Es kann jedoch auch sinnvoll sein, das kohlenstoffdioxidhaltige Kuppelgas zu zerlegen und lediglich bei der Zerlegung abgetrenntes Kohlenstoffdioxid in den Reaktionsraum weiterzuführen. Hierdurch kann die Einbringung von unerwünschten Stoffen, wie z.B. von Stickstoff, aus dem Gichtgas zu etwa 50 Vol.-% besteht, in den Reaktionsraum vermieden werden. Ferner kann eine vorherige Abtrennung von weiteren unterwünschten Stoffen, wie z.B. Schwermetallen in Gichtgasen, vorteilhaft sein. Solche Abtrennung- oder Zerlegungsstufen können nach allen dem Fachmann bekannten Verfahren erfolgen.

Prinzipiell eignet sich das erfindungsgemäße Verfahren zur Verwertung von beliebigen kohlenwasserstoffhaltigen, bevorzugt alkan-haltigen, insbesondere methanhaltigen und/oder kohlenstoffdioxidhaltigen Kuppelgasen. Vorzugsweise wird es jedoch dazu eingesetzt, um aus Kokereigas ein Wasserstoff und Kohlenstoffmonoxid enthaltendes Synthesegas zu erzeugen.

Bei der Verwendung von kohlenstoffdioxidhaltigem Kuppelgas wird für die Methanumsetzung benötigtes Methan zweckmäßigerweise aus einer oder mehreren Methanquelle, z.B. KokereiGas und/oder Erdgas, bezogen und in den Reaktionsraum eingebracht.

Als Träger können alle dem Fachmann bekannten Träger eingesetzt werden, beispielsweise Korund (Al2O3), Quarzglas (SiO2), Mullit Al2O3.SiO2), Cordierit ((Mg,Fe²⁺)₂(Al₂Si)[Al₂Si₄O₁₈]), Steatit (SiO2.MgO.Al2O3) und kohlenstoffhaltige Granulate, bevorzugt kohlenstoffhaltige Granulate.

Unter einem kohlenstoffhaltigen Granulat ist in der vorliegenden Erfindung ein Material zu verstehen, das vorteilhaft aus festen Körnern besteht, die mindestens 50 Gew.-%, bevorzugt mindestens 80 Gew.-%, insbesondere mindestens 90 Gew.-% Kohlenstoff aufweisen. Das kohlenstoffhaltige Granulat besitzt vorteilhaft eine Körnung, d.h. einen Äquivalenzdurchmesser, der durch Siebung mit einer bestimmten Maschengröße bestimmbar ist, von 0,5 bis 100 mm, bevorzugt von 1 bis 80 mm. Das kohlenstoffhaltige Granulat ist vorteilhaft kugelförmig. In dem erfindungsgemäßen Verfahren kann eine Vielzahl von unterschiedlichen kohlenstoffhaltigen Granulaten eingesetzt werden. Ein derartiges Granulat kann beispielsweise überwiegend aus Kohle, Koks, Koksgrus und/oder Mischungen hieraus bestehen. Koksgrus weist in der Regel eine Körnung von kleiner 20 mm auf. Ferner kann das kohlenstoffhaltige Granulat 0 bis 15 Gew.-% bezogen auf die Gesamtmasse des Granulats, bevorzugt 0 bis 5 Gew.-%, Metall, Metalloxid und/oder Keramik enthalten. Mit besonderem Vorzug werden Granulate eingesetzt, die Koksgrus und/oder geringwertigen, d.h. nicht direkt für den Verhüttungsprozess geeigneten Koks, Kokereikoks auf Braun- oder Steinkohlebasis, bevorzugt hochporöser Kokereikoks auf Braun- oder Steinkohlebasis mit einer Oberfläche von vorteilhaft > 100 m²/g, bevorzugt > 250 m²/g, insbesondere > 500 m²/g, und/oder aus Biomasse gewonnenen Koks umfassen.

Der ggf. durch das erfindungsgemäße Verfahren gebildete kohlenstoffhaltige Feststoff, bevorzugt Kohlenstoff, lagert sich vorteilhaft zu mindestens 75 Gew.-% bezogen auf die gesamte Masse des gebildeten Kohlenstoffs, bevorzugt mindestens 80 Gew.-%, ganz besonders bevorzugt mindestens 90 Gew.-%, insbesondere mindestens 95 Gew.-%, an den Träger, vorteilhaft an das kohlenstoffhaltige Granulat, an.

Bei der Durchführung des erfindungsgemäßen Verfahrens stellt daher entstehender Kohlenstoff kein Problem dar, da er sich vorwiegend auf den Träger, bevorzugt auf den Körnern des kohlenstoffhaltigen Granulats, ablagert und lediglich deren Größe, Struktur und Festigkeit ändert. Der Träger, bevorzugt das kohlenstoffhaltige Granulat, filtert Kohlenstoff aus der Gasphase heraus, so dass das erzeugte Synthesegas weitgehend frei von Kohlenstoffpartikeln aus dem Reaktionsraum abgezogen werden kann. Vorteilhaft liegt der Kohlenstoffgehalt im Synthesegas maximal bei < 2 mg/Nm³, bevorzugt bei < 0,5 mg/Nm³, besonders bevorzugt bei < 0,1 mg/Nm³, insbesondere bei < 0,05 mg/Nm³.

Durch Gegenstromführung von Gas und Feststoff (Träger) wird eine Fahrweise mit integrierter Wärmerückführung realisiert. Dabei wird die Reaktionszone auf dem hohen Temperaturniveau im mittleren Abschnitt des Reaktors lokalisiert während in der oberen und unteren Randzone die Temperatur abfällt. Um diesen Betriebszustand zu erreichen, müssen vorteilhaft der Gasstrom und der Feststoffstrom passend zueinander eingestellt werden. Dadurch ist die Feststoffverweilzeit an der Gasverweilzeit im Reaktor vorteilhaft wie folgt gekoppelt:
Die Feststoffverweilzeit pro Gasverweilzeit unter Normbedingungen ist vorteilhaft im Bereich von 200 bis 5000, bevorzugt im Bereich 300 bis 3000, insbesondere 400 bis 2000.

Die Querschnittsbelastung des Feststoffs beträgt vorteilhaft 0,01 bis 20 kg/m²/s, bevorzugt 0,05 bis 10 kg/m²/s, insbesondere 1 bis 5 kg/m²/s.

Durch das erfindungsgemäße Verfahren kann das Wasserstoff zu Kohlenstoffmonoxid-Verhältnis im Synthesegas bedarfsgesteuert einstellt werden. Eine Ausgestaltung des erfindungsgemäßen Verfahrens macht sich den Mechanismus der Kohlenstoffabscheidung zunutze, indem die gasförmigen Einsatzstoffe mit einem molaren Kohlenstoff/Sauerstoff-Verhältnis C/O > 1 in den Reaktionsraum eingebracht werden, so dass neben Synthesegas gezielt Kohlenstoff erzeugt und auf dem Träger, bevorzugt den Körnern des kohlenstoffhaltigen Granulats, abgeschieden wird.

Andererseits kann Kohlenstoff von den Körnern des Granulats abgetragen werden, wenn ein molares Kohlenstoff/ Sauerstoff-Verhältnis C/O < 1 eingestellt wird.

Auf diese Weise ist es möglich, aus einem minderwertigen Granulat durch gezielte Vergrößerung oder Verkleinerung des Porenvolumens ein hochwertiges Koks-Produkt zu erzeugen, das aus dem Reaktionsraum abgezogen und beispielsweise im Hochofen oder in Gießereien eingesetzt werden kann. Unter einem hochwertigen Koks-Produkt sind solche Koke zu verstehen, die einen Durchmesser von 35 bis 80 mm und eine Trommelfestigkeit I40 für Hochofenkoks > 40% gemäß ISO/FDIS 18894:2003 aufweisen.

Die für die Durchführung des erfindungsgemäßen Verfahrens erforderliche thermische Energie kann beispielsweise via oxidative, solare und/oder elektrische Energiequellen bereitgestellt werden. Der Energieeintrag kann an allen dem Fachmann bekannten Verfahren erfolgen.

Eine bevorzugte Ausgestaltung sieht vor, dass für die Durchführung des erfindungsgemäßen Verfahrens erforderliche thermische Energie durch Oxidation oder partielle Oxidation eines Brennstoffs erzeugt wird, der Kohlenwasserstoffe und/oder Wasserstoff umfasst. Als Oxidationsmittel werden vorzugsweise Luft und/oder mit Sauerstoff angereicherte Luft und/oder technisch reiner Sauerstoff verwendet. Oxidation oder partielle Oxidation können außerhalb des Reaktionsraums durchgeführt werden, wozu der Brennstoff mit einem Oxidationsmittel gemischt und zur Reaktion gebracht wird. Das entstehende heiße Gas wird nachfolgend in den Reaktionsraum eingeleitet und durch den Träger, bevorzugt das kohlenstoffhaltige Granulat, geführt, wobei es einen Teil seiner fühlbaren Wärme an den Träger, bevorzugt das kohlenstoffhaltige Granulat und/oder die umzusetzenden Gase abgibt. Das Oxidationsmittel kann jedoch auch in den Reaktionsraum eingeleitet und dort mit einem vorliegenden Brennstoff vermischt und zur Reaktion gebracht werden.

Umfasst das kohlenstoffhaltige Granulat geringwertigen Kokereikoks auf Braunkohle-, Steinkohle- oder Biomassebasis, aus dem bei erhöhter Temperatur Pyrolysegase austreten können, so kann zur Energiegewinnung vorteilhaft sein, im Anschluss an die Pyrolysezone Sauerstoff einzuspeisen und die Pyrolysegase bei Temperaturen > 1000°C zumindest partiell zu Synthesegas zu oxidieren.

In einer anderen Ausgestaltung wird ein heißes Gas mit Hilfe einer außerhalb des Reaktionsraums angeordneten elektrischen Heizeinrichtung erzeugt, durch die ein Gasstrom geführt und dabei mit Hilfe eines Lichtbogen erhitzt wird, bevor er mit einer Temperatur zwischen 2000 und 5000°C, bevorzugt zwischen 3500 und 4000°C in die Hochtemperaturzone eingeleitet wird und dort seine Wärme an den oder die Reaktanden abgibt. Der Gasstrom kann beispielsweise aus bei der Methanzersetzung gewonnenem Wasserstoff bestehen, der aus dem Reaktionsraum abgezogen und nach eventueller Reinigung (z.B. Entstaubung) der elektrischen Heizeinrichtung zugeleitet und zumindest teilweise ionisiert wird.

Eine weitere bevorzugte Ausgestaltung des erfindungsgemäßen Verfahrens sieht vor, dass thermische Energie im Reaktionsraum durch elektromagnetische Induktion erzeugt wird. Im Reaktionsraum sind hierzu ein oder mehrere elektrisch leitfähige Elemente so angeordnet, dass sie mit den umzusetzenden Gasen und/oder dem kohlenstoffhaltigen Granulat in thermische Verbindung treten können. Über ein elektromagnetisches Wechselfeld werden Wirbelströme in den elektrisch leitfähigen Elementen erzeugt, die sich dadurch aufheizen. Die auf diese Weise erzeugte Wärme überträgt sich direkt oder indirekt auf die umzusetzenden Gase und deckt somit wenigstens teilweise den für die Synthesegasbildung erforderlichen Energiebedarf. Das oder die elektrisch leitfähigen Elemente werden fest im Reaktionsraum angeordnet und/oder in granularer Form im kohlenstoffhaltigen Granulat verteilt, so dass sie gemeinsam mit diesem in den Reaktionsraum eingebracht und aus dem Reaktionsraum entfernt werden.

Vorteilhaft kann es auch sein, thermische Energie im Reaktionsraum über einen elektrischen Strom zu erzeugen, der durch das kohlenstoffhaltige Granulat geleitet wird und dieses erhitzt.

Die erfindungsgemäße Reaktion von kohlenwasserstoffhaltigen, bevorzugt alkanhaltigen, insbesondere methan-und/oder kohlenstoffdioxid-haltige Kuppelgas, Begleitgas und/oder Biogas wird vorteilhaft bei einer Temperatur in der Reaktionszone zwischen 1100 und 1400°C durchgeführt.

Die erfindungsgemäße Reaktion wird vorteilhaft bei Atmosphärendruck bis zu einem Druck von 50 bar durchgeführt. Bevorzugt wird das erfindungsgemäße Verfahren in dem Druckbereich durchgeführt, in dem die Kuppelgase, Begleitgase und/oder Biogase anfallen.

Vorzugsweise wird der Träger, bevorzugt das kohlenstoffhaltige Granulat, als Wanderbett, durch den Reaktionsraum geführt, wobei die Reaktionsgase, insbesondere Methan und Kohlenstoffdioxid, zweckmäßigerweise im Gegenstrom zum Granulat geleitet werden. Der Reaktionsraum ist hierfür sinnvollerweise als senkrechter Schacht ausgeführt, so dass die Bewegung des Wanderbetts alleine unter Wirkung der Schwerkraft zustande kommt.

Unter Verwendung eines Wander- oder Wirbelbettes ist die Temperatur des Trägers, bevorzugt des kohlenstoffhaltigen Granulats, vorteilhaft beim Reaktoreintritt zwischen 0 und 300 °C, bevorzugt 10 und 150°C, insbesondere 50 bis 100°C. Die Temperatur der Edukt-Gase ist beim Reaktoreintritt vorteilhaft zwischen 0 und 100 °C, bevorzugt 10 bis 50°C.

Wird der Träger, bevorzugt das kohlenstoffhaltige Granulat, als Wanderbett durch den Reaktionsraum geführt, so sieht eine besonders bevorzugte Variante des erfindungsgemäßen Verfahrens vor, dass das Granulat mit Umgebungstemperatur, vorteilhaft 0 bis 300°C, bevorzugt 10 und 150°C, insbesondere 20 bis 100°C, in den Reaktionsraum eingeleitet, dort zunächst bis auf eine Maximaltemperatur aufgeheizt und anschließend wieder abgekühlt wird, wobei die Maximaltemperatur in einer Hochtemperaturzone liegt, in der Temperaturen von mehr als 1000°C herrschen. Die Abkühlung kann bis in die Nähe der Umgebungstemperatur durchgeführt werden, so dass eine Kühlung bzw. Löschung des aus dem Reaktionsraum abgezogenen kohlenstoffhaltigen Granulats nicht erforderlich ist. Zur Ausbildung und Aufrechterhaltung des beschriebenen Temperaturprofils wird vorgeschlagen, zumindest das methanhaltige und/oder kohlenstoffdioxidhaltige Kuppelgas, Begleitgas und/oder Biogas mit Umgebungstemperatur, vorteilhaft zwischen 0 und 100 °C, bevorzugt 10 bis 50°C in den Reaktionsraum einzuleiten und im Gegenstrom durch das Wanderbett zu führen. Auf seinem Weg durch den Reaktionsraum tauscht das Kuppelgas, Begleitgas und/oder Biogas in direktem Kontakt mit dem Wanderbett Wärme aus, wobei das Kuppelgas, Begleitgas und/oder Biogas bis auf über 1000°C aufgeheizt und das Wanderbett gleichzeitig abgekühlt wird. In der Reaktionszone, der Hochtemperaturzone, gebildetes heißes Synthesegas wird weiter im Gegenstrom durch das Wanderbett geführt und in direktem Wärmetausch mit diesem abgekühlt, so dass Wasserstoff und Kohlenstoffmonoxid mit einer Temperatur in der Nähe der Umgebungstemperatur, vorteilhaft 10 bis 400°C, insbesondere 20 bis 200°C, aus dem Reaktionsraum abgezogen werden können. Für die Synthesegaserzeugung erforderliche thermische Energie wird insbesondere in der Hochtemperaturzone erzeugt und/oder in die Hochtemperaturzone eingebracht. Die Erzeugung und/oder Einbringung von thermischer Energie an anderen Stellen des Reaktionsraumes soll jedoch nicht ausgeschlossen werden.

Bei dieser Verfahrensweise ist es möglich, das in der Hochtemperaturzone gebildete Synthesegas sehr rasch, bevorzugt mit > 300 K/s, besonders bevorzugt mit > 500 K/s, insbesondere mit > 1000 K/s, abzukühlen, wodurch die Boudouard-Reaktion und die Methanisierung effektiv unterdrückt werden können, durch die einerseits aus Kohlenstoffmonoxid, Kohlenstoffdioxid und Kohlenstoff und andererseits aus Wasserstoff und Kohlenstoff Methan gebildet werden. Vorteilhaft ist in der Abkühlungszone der Ausbeuteverlust von CO und H2 gegenüber der Ausbeute bei Maximaltemperatur vorteilhaft kleiner als 10%, bevorzugt kleiner als 5 %, besonders bevorzugt kleiner als 3 %, insbesondere kleiner als 2 %.

Die Erfindung sieht einen aus Trägermaterial, bevorzugt kohlenstoffhaltigem Granulat gebildeten Kreislauf vor, durch den ein Teil des in der Hochtemperaturzone gebildeten Synthesegases im Gegenstrom geführt und dabei abgekühlt wird. Ebenfalls möglich ist der Einsatz eines Wärmerohres, über das Wärme aus dem Synthesegas abgeführt wird. Sowohl die über den Granulatkreislauf als auch über das Wärmerohr abgeführte Wärme kann zur Vorwärmung von Einsatzstoffen genutzt werden. Wenn der Prozess in einem wärmeintegrierten Verbundstandort eingebettet ist, kann die fühlbare Wärme des Synthesegases auf andere Prozesse exportiert werden. In diesem Fall muss im Pyrolysereaktor keine Wärmeübertragungszone zur Abkühlung des Synthesegases und keine Kreisführung des Feststoffes vorgesehen werden.

Die Körner, aus denen das aus dem Reaktionsraum abgezogene kohlenstoffhaltige Produkt besteht, streuen in ihrer Korngröße und in ihrer Dichte, so dass eine direkte Verwertung des kohlenstoffhaltigen Produktes beispielsweise als Hochofenkoks nur teilweise möglich ist. Vorteilhaft weist ein Hochofenkoks eine Korngröße zwischen 35 und 80mm und eine Dichte zwischen 0,9 g/cm³ und 1,1 g/cm³ auf. Erfindungsgemäß ist daher vorgesehen, das aus dem Reaktionsraum abgezogene kohlenstoffhaltige Granulat durch Siebung und/oder Sichtung zu klassieren. Körner, die innerhalb der geforderten Spezifikation liegen, werden als Produkt ausgetragen. Körner, deren Durchmesser zu klein oder deren Dichte zu niedrig oder zu hoch für den beabsichtigten Einsatzzweck sind, werden vorzugsweise wieder in den gleichen oder einen parallel betriebenen Reaktionsraum zurückgeführt. Körner mit zu großen Durchmessern werden vor ihrer Rückführung gebrochen, wobei der Feinanteil zurückgeführt wird.

Eine Ausgestaltung des erfindungsgemäßen Verfahrens sieht daher vor, dass ein im Verfahren auftretendes Gas, d.h. Wasserstoff oder Synthesegas, vorteilhaft zur Reinigung durch ein Koksbett, beinhaltend z.B. Braun- und oder Steinkohlenkoks, geleitet und dabei von Substanzen befreit wird, die selbst im Synthesegas unerwünscht sind oder im Reaktionsraum in unerwünschte Substanzen umgesetzt werden können. Abhängig von seiner Qualität kann der bei der Gasreinigung mit unerwünschten Substanzen beladene Koks vorteilhaft durch Verbrennung entsorgt oder einer Kokerei als Einsatz zugeführt werden.

Das erfindungsgemäße Verfahren ermöglicht es, das Vielstoffgemisch Kuppelgas, Begleitgas und/oder Biogas enthaltend Kohlenwasserstoffe, insbesondere Methan, und/oder Kohlenstoffdioxid durch Aufreinigung und Umsetzung zu Synthesegas und/oder Wasserstoff stofflich zu nutzen. Aus dem bei der Methanumsetzung entstehenden Synthesegas können nachfolgend Wasserstoff, Kohlenstoffmonoxid und/oder eine Mischung aus Wasserstoff und Kohlenstoffmonoxid abgetrennt und entweder selbst als Produkte abgegeben oder zur Herstellung von Produkten, wie beispielsweise Methanol, Dimethylether oder von Kohlenwasserstoffen mit einem Grundgerüst von größer gleich zwei Kohlenstoff-Atomen eingesetzt werden.

Vorteilhaft an der stofflichen Verwertung der Kuppelgase, Begleitgase und/oder Biogase - neben der Einsparung der CO2-Emission, die beim Abfackeln entstehen würde - ist, dass im Vergleich zum Verbrennen in der Fackel ein durch die Umsetzung von Kohlenstoffdioxid um bis zu 25 % höherer Prozentteil der Kuppelgaszusammensetzung verwertet werden kann.

Alle Anteile der Produkt-Gasmischung, ausgenommen Stickstoff, können stofflich als C, CO und H2 genutzt werden, vorteilhaft liegt der Prozentanteil der stofflichen Nutzbarmachung im Bezug auf die drei genannten Komponenten bei größer als 95 %, bevorzugt größer als 98 %, insbesondere größer als 99 %.

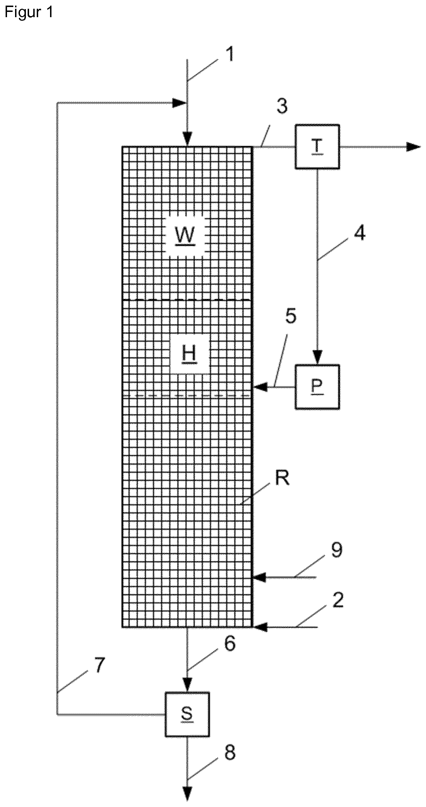

Im Folgenden soll die Erfindung anhand eines in der Figur 1 schematisch dargestellten Ausführungsbeispiels näher erläutert werden.

Die Figur 1 zeigt eine Variante des erfindungsgemäßen Verfahrens, bei dem Methan mit Kohlenstoffdioxid in einem kontinuierlichen Prozess zu Synthesegas und Hochofenkoks umgesetzt wird.

Über die Zuführung 1 wird ein kohlenstoffhaltigen Granulat, bei dem es sich beispielsweise um Koksgrus handelt, mit Umgebungstemperatur von oben in den Reaktionsraum R eingeleitet, durch den es nachfolgend unter Wirkung der Schwerkraft in einem Wanderbett W nach unten geführt wird. Gleichzeitig wird ein Methan enthaltendes Kuppelgas 2, bei dem es sich beispielsweise um Kokereigas handelt, und ggf. zusätzlich Erdgas, gemeinsam mit Kohlenstoffdioxid 9 von unten in den Reaktionsraum R geleitet und im Gegenstrom durch das Wanderbett W nach oben geführt. Die Gase 2 und 9, die bei ihrem Eintritt in den Reaktionsraum R Umgebungstemperatur aufweisen, werden auf ihrem Weg nach oben in direktem Wärmetausch mit dem Wanderbett W aufgeheizt. In der Hochtemperaturzone H, in der Temperaturen von mehr als 1000°C herrschen, reagieren in erster Linie Methan und Kohlenstoffdioxid zu Wasserstoff und Kohlenstoffmonoxid, wodurch ein Synthesegas gebildet wird. Durch thermische Zersetzung von Methan und die Boudouard-Reaktion wird jedoch auch Kohlenstoff gebildet, der sich zum überwiegenden Teil an die kohlenstoffhaltigen Körner des Wanderbetts W anlagert. Das gebildete heiße Synthesegas strömt weiter nach oben, wobei es in direktem Wärmetausch mit dem Wanderbett W abgekühlt wird, so dass über Leitung 3 Synthesegas mit einer Temperatur abgezogen werden kann, die ggf. oberhalb der Umgebungstemperatur aber mindestens 500 K unter der Reaktionstemperatur liegt. In der Trenneinrichtung T wird Wasserstoff 4 aus dem Synthesegas abgetrennt, der nachfolgend in der elektrischen Heizeinrichtung P mit Hilfe eines Lichtbogens in ein heißes Gas 5 umgesetzt wird. Mit einer Temperatur zwischen 2000 und 5000°C wird das heiße Gas 5 in die Hochtemperaturzone H eingeleitet und stellt dort den überwiegenden Teil der für die Synthesegaserzeugung benötigten Energie bereit. Am unteren Ende des Reaktionsraums R wird Granulat 6 mit nahezu Umgebungstemperatur abgezogen, das aufgrund der Kohlenstoffanlagerungen beispielsweise als Hochofenkoks oder Kokereizuschlagsstoff eingesetzt werden kann. Bestandteile des Granulats 6, die die Qualitätsanforderungen nicht erfüllen, weil sie einen zu großen (> 80 mm) oder zu kleinen (< 35 mm) Durchmesser oder eine zu geringe Festigkeit (Trommelfestigkeit I40 für Hochofenkoks > 40% aufweisen gemäß ISO/FDIS 18894:2003) aufweisen, werden in der Trenneinrichtung S durch Siebung und/oder Sichtung abgetrennt und nach einer eventuellen Zerkleinerung über Leitung 7 wieder in den Reaktionsraum R zurückgeführt. Bei dem verbleibenden Rest 8 handelt es sich um Hochofenkoks, der als hochwertiges Produkt abgegeben wird.

## Patentansprüche

1. Verfahren zur Verwertung eines kohlenwasserstoffhaltigen und kohlenstoffdioxid-haltigen Kuppelgases, Begleitgases und/oder Biogases, **dadurch gekennzeichnet, dass** kohlenwasserstoffhaltiges und kohlenstoffdioxidhaltiges Kuppelgas, Begleitgas und/oder Biogas in einen Reaktionsraum eingeleitet wird und das im Kuppelgas, Begleitgas und/oder Biogas enthaltene Vielkomponentengemisch in einer Hochtemperaturzone bei Temperaturen zwischen 1100 und 1400°C und in Gegenwart eines Trägers in ein Produkt-Gasgemisch, das zu mehr als 95% aus CO, CO2, H2, H2O, CH4 und N2 besteht, umgewandelt wird, wobei der Träger als Wanderbett durch den Reaktionsraum geführt wird und die Gasmischung Kuppelgas, Begleitgas und/oder Biogas im Gegenstrom zum Träger geleitet wird und das in der Hochtemperaturzone, gebildete heiße Synthesegas weiter im Gegenstrom durch das Wanderbett geführt und in direktem Wärmetausch mit diesem abgekühlt wird, wobei die Strömungsgeschwindigkeit der Gasmischung Kuppelgas, Begleitgas und/oder Biogas in der Reaktionszone weniger als 20 m/s beträgt und das in der Hochtemperaturzone gebildete Synthesegas mit > 200 K/s abgekühlt wird.

2. Verfahren nach Anspruch 1, **dadurch gekennzeichnet, dass** die Strömungsgeschwindigkeit weniger als 10 m/s beträgt.

3. Verfahren nach Anspruch 1 oder 2, **dadurch gekennzeichnet, dass** die Feststoffverweilzeit pro Gasverweilzeit unter Normbedingungen im Bereich von 200 bis 5000 ist.

4. Verfahren nach einem der Ansprüche 1 bis 3, **dadurch gekennzeichnet, dass** für die Methanumsetzung benötigtes Kohlenstoffdioxid zumindest teilweise über ein kohlenstoffdioxidhaltiges Kuppelgas zur Verfügung gestellt wird.

5. Verfahren nach einem der Ansprüche 1 bis 4, **dadurch gekennzeichnet, dass** das molare Kohlenstoff/Sauerstoff-Verhältnis der gasförmigen Einsatzstoffe größer als 1 eingestellt wird.

6. Verfahren nach einem der Ansprüche 1 bis 4, **dadurch gekennzeichnet, dass** das molare Kohlenstoff/Sauerstoff-Verhältnis der gasförmigen Einsatzstoffe kleiner als 1 eingestellt wird.

7. Verfahren nach einem der Ansprüche 1 bis 6, **dadurch gekennzeichnet, dass** als Träger kohlenstoffhaltiges Granulat verwendet wird.

8. Verfahren nach einem der Ansprüche 1 bis 7, **dadurch gekennzeichnet, dass** der Träger mit einer Temperatur von 0 bis 300°C in den Reaktionsraum eingeleitet wird.

9. Verfahren nach einem der Ansprüche 1 bis 8, **dadurch gekennzeichnet, dass** Wasserstoff und Kohlenstoffmonoxid mit einer Temperatur von 10 bis 400°C aus dem Reaktionsraum abgezogen werden.

10. Verfahren nach einem der Ansprüche 1 bis 9, **dadurch gekennzeichnet, dass** das Verfahren ohne Einsatz eines aktivmetallhaltigen Katalysators durchgeführt wird.

11. Verfahren nach einem der Ansprüche 1 bis 5 oder 7 bis 10, **dadurch gekennzeichnet, dass** die gasförmigen Einsatzstoffe mit einem molaren Kohlenstoff/Sauerstoff-Verhältnis C/O > 1 in den Reaktionsraum eingebracht werden, so dass neben Synthesegas gezielt Kohlenstoff erzeugt und auf dem kohlenstoffhaltigen Granulat abgeschieden wird.

12. Verwendung von nach dem Anspruch 11 hergestelltem Kohlenstoff im Hochofen oder in Gießereien.

## Claims

1. A process for utilizing a hydrocarbon-comprising and carbon dioxide-comprising coproduct gas, accompanying gas and/or biogas, wherein hydrocarbon-comprising and carbon dioxide-comprising coproduct gas, accompanying gas and/or biogas is introduced into a reaction space and the multicomponent mixture comprised in the coproduct gas, accompanying gas and/or biogas is converted in a high-temperature zone at temperatures in the range from 1100 to 1400°C and in the presence of a carrier into a product gas mixture which comprises more than 95% of CO, CO₂, H₂, H₂O, CH₄ and N₂ where the carrier is conveyed as moving bed through the reaction space and the gas mixture of coproduct gas, accompanying gas and/or biogas is conveyed in countercurrent to the carrier and the hot synthesis gas formed in the high-temperature zone is conveyed further in countercurrent through the moving bed and is cooled by direct heat exchange with this, where the flow velocity of the gas mixture of coproduct gas, accompanying gas and/or biogas in the reaction zone is less than 20 m/s and the synthesis gas formed in the high-temperature zone is cooled at > 200 K/s.

2. The process according to claim 1, wherein the flow velocity is less than 10 m/s.

3. The process according to claim 1 or 2, wherein the solids residence time per unit gas residence time under standard conditions is in the range from 200 to 5000.

4. The process according to any of claims 1 to 3, wherein carbon dioxide required for the reaction of methane is at least partly provided via a carbon dioxide-comprising coproduct gas.

5. The process according to any of claims 1 to 4, wherein the molar carbon/oxygen ratio of the gaseous starting materials is set to greater than 1.

6. The process according to any of claims 1 to 4, wherein the molar carbon/oxygen ratio of the gaseous starting materials is set to less than 1.

7. The process according to any of claims 1 to 6, wherein carbon-comprising granular material is used as carrier.

8. The process according to any of claims 1 to 7, wherein the carrier is introduced at a temperature of from 0 to 300°C into the reaction space.

9. The process according to any of claims 1 to 8, wherein hydrogen and carbon monoxide are taken off from the reaction space with a temperature of from 10 to 400°C.

10. The process according to any of claims 1 to 9, wherein the process is carried out without use of an active metal-comprising catalyst.

11. The process according to any of claims 1 to 5 or 7 to 10, wherein the gaseous starting materials are introduced with a molar carbon/oxygen ratio C/O of > 1 into the reaction space so that, in addition to synthesis gas, carbon is produced in a targeted manner and deposited on the carbon-comprising granular material.

12. The use of carbon produced according to claim 11 in a blast furnace or in foundries.

## Revendications

1. Procédé de valorisation d'un gaz sous-produit, d'un gaz accompagnateur et/ou d'un biogaz contenant des hydrocarbures et contenant du dioxyde de carbone, **caractérisé en ce que** le gaz sous-produit, le gaz accompagnateur et/ou le biogaz contenant des hydrocarbures et contenant du dioxyde de carbone est introduit dans une chambre de réaction et le mélange de plusieurs composants contenu dans le gaz sous-produit, le gaz accompagnateur et/ou le biogaz est transformé dans une zone haute température à des températures comprises entre 1 100 et 1 400 °C et en présence d'un support en un mélange gazeux de produits qui est constitué de plus de 95 % de CO, CO₂, H₂, H₂O, CH₄ et N₂, le support étant conduit au travers de la chambre de réaction sous la forme d'un lit mobile et le mélange gazeux du gaz sous-produit, du gaz accompagnateur et/ou du biogaz étant conduit à contre-courant du support, et le gaz de synthèse chaud formé dans la zone haute température étant encore conduit à contre-courant au travers du lit mobile et refroidi par échange de chaleur direct avec celui-ci, la vitesse d'écoulement du mélange gazeux du gaz sous-produit, du gaz accompagnateur et/ou du biogaz dans la zone de réaction étant inférieure à 20 m/s et le gaz de synthèse formé dans la zone haute température étant refroidi à > 200 K/s.

2. Procédé selon la revendication 1, **caractérisé en ce que** la vitesse d'écoulement est inférieure à 10 m/s.

3. Procédé selon la revendication 1 ou 2, **caractérisé en ce que** le temps de séjour des solides par rapport au temps de séjour du gaz en conditions normées est dans la plage allant de 200 à 5 000.

4. Procédé selon l'une quelconque des revendications 1 à 3, **caractérisé en ce que** le dioxyde de carbone nécessaire pour la transformation du méthane est au moins en partie mis à disposition par un gaz sous-produit contenant du dioxyde de carbone.

5. Procédé selon l'une quelconque des revendications 1 à 4, **caractérisé en ce que** le rapport molaire carbone/oxygène des matières premières gazeuses est ajusté à plus de 1.

6. Procédé selon l'une quelconque des revendications 1 à 4, **caractérisé en ce que** le rapport molaire carbone/oxygène des matières premières gazeuses est ajusté à moins de 1.

7. Procédé selon l'une quelconque des revendications 1 à 6, **caractérisé en ce qu'**un granulat contenant du carbone est utilisé en tant que support.

8. Procédé selon l'une quelconque des revendications 1 à 7, **caractérisé en ce que** le support est introduit dans la chambre de réaction à une température de 0 à 300 °C.

9. Procédé selon l'une quelconque des revendications 1 à 8, **caractérisé en ce que** de l'hydrogène et du monoxyde de carbone sont soutirés de la chambre de réaction à une température de 10 à 400 °C.

10. Procédé selon l'une quelconque des revendications 1 à 9, **caractérisé en ce que** le procédé est réalisé sans utiliser un catalyseur contenant un métal actif.

11. Procédé selon l'une quelconque des revendications 1 à 5 ou 7 à 10, **caractérisé en ce que** les matières premières gazeuses sont introduites dans la chambre de réaction avec un rapport molaire carbone/oxygène C/O > 1, de manière à former du carbone de manière ciblée en plus du gaz de synthèse et à le déposer sur le granulat contenant du carbone.

12. Utilisation de carbone fabriqué selon la revendication 11 dans un haut-fourneau ou dans des fonderies.
